# EUROPÄISCHE PATENTSCHRIFT

(11) **EP 1 604 563 B1**
(45) Veröffentlichungstag und Bekanntmachung des Hinweises auf die Patenterteilung: **05.11.2008**
(21) Anmeldenummer: 05009893.8
(22) Anmeldetag: 06.05.2005
(51) Int. Cl.: A01F 15/07

(54) **Erntemaschine zum Aufnehmen von landwirtschaftlichem Erntegut**
Device for picking up and pressing of harvested agricultural crop
Dispositif pour ramasser et compacter des matières récoltées

(30) Priorität: 11.05.2004 DE 102004023760
(43) Veröffentlichungstag der Anmeldung: 14.12.2005
(73) Patentinhaber: Maschinenfabrik Bernard Krone GmbH, 48480 Spelle (DE)
(72) Erfinder: Krone, Bernard, Dr.-Ing. E.h., 48480 Spelle (DE); van Bassen, Alois, 49832 Freren (DE)

(56) Entgegenhaltungen:
- EP-A- 0 074 533
- EP-A- 0 339 733
- EP-A- 1 062 860
- DE-A1- 4 102 034
- DE-A1- 19 841 598
- DE-C1- 4 219 719

## Beschreibung

Die Erfindung betrifft eine Erntemaschine zum Aufnehmen von landwirtschaftlichem Erntegut mit einer Aufnahmevorrichtung, die einen Förderkanal umfasst, durch den das Erntegut transportiert wird und der mit einem absenkbaren Boden zur Vergrößerung des Förderkanals versehen ist.

Eine gattungsgemäße Erntemaschine der vorgenannten Art ist beispielsweise aus der EP 0 074 533 A1 bekannt, in der ein Ladewagen für Halmgut offenbart ist. Der dort vorgesehene Förderkanalboden mit den zum Teil darin befindlichen Messern ist mittels eines Hebelgestänges absenkbar. Durch die Absenkung des in Fahrtrichtung hinteren Teils des Förderkanalbodens wird der Förderkanal selbst vergrößert, so dass etwa festsitzendes Material leichter weitertransportiert werden kann. Nachteilig ist hierbei, dass das im Bereich des vorderen Teils des Förderkanals angesammelte Material aufgrund der dort nicht auftretenden Größenänderung des Förderkanals häufig nicht wirksam entfernt werden kann.

Eine weitere Erntemaschine gemäß dem Stand der Technik geht aus der EP 1 062 860 A2 hervor, wobei die hier offenbarte und als Aufsammelpresse ausgeführte Erntemaschine eine einem Aufsammler nachgeordnete Schneideinrichtung aufweist, an die sich eine Fördereinrichtung zum Zuführen des Erntegutes in einen Presskanal anschließt. Sowohl der Schneideinrichtung als auch der Fördereinrichtung ist ein schwenkbeweglicher Kanalboden zugeordnet, wobei beide Kanalböden an ihren einander zugewandten Enden miteinander verbunden sind. Auch hier ist es als nachteilig anzusehen, dass im Bereich des vorderen Teils des Förderkanals angesammeltes Erntegut aufgrund nicht auftretender Größenänderungen des Förderkanals nicht wirksam entfernt werden kann.

Es ist daher die Aufgabe der vorliegenden Erfindung, eine gattungsgemäße Erntemaschine zu schaffen, bei der etwaige Verstopfungen und/oder Erntegutstauungen wirksam zu entfernen sind.

Diese Aufgabe wird gelöst durch eine Erntemaschine der eingangs genannten Art, bei der das in Gutflussrichtung vordere Förderkanalbodenteil durch Verschwenkung des Erntegutaufnehmers relativ zum in Gutflussrichtung hinteren Förderkanalbodenteil verlagerbar ist. Muss der Förderkanalboden abgesenkt oder geöffnet werden, um Verstopfungen zu entfernen, kann dieses erfingdungsgemäß variabler und wirkungsvoller erfolgen als dieses bislang im Stand der Technik möglich war. So können leichtere Verstopfungen z. B. bereits nur durch Anheben des Erntegutaufnehmers beseitigt werden, ohne dass der Förderkanalboden als Ganzes abgesenkt werden muss.

Bevorzugterweise sind die einzelnen Teile des Förderkanalbodens um eigene Schwenkachsen verschwenkbar ausgebildet, so daß mit den schwenkbaren Teilen relativ zum bisherigen Förderkanalboden größere Winkel bestrichen werden können, was wiederum für einen besseren Erntegutfluss sorgt.

Weitere Vorteile und Einzelheiten der Erfindung ergeben sich aus den Unteransprüchen, der Zeichnung sowie der nachfolgenden Beschreibung. In der Zeichnung zeigt:
- Figur 1: Einen Längsschnitt durch ein Ausführungsbeispiel einer erfindungsgemäßen Erntemaschine,
- Figur 2: einen Längsschnitt durch die Aufnahmevorrichtung der Erntemaschine nach Fig. 1 in einer Betriebsstellung,
- Figur 3: den Gegenstand nach Figur 2 in einer Betriebsstellung mit erweitertem Förderkanal,
- Figur 4: den Gegenstand nach Figur 3 in einer weiteren Betriebsstellung mit erweitertem Förderkanal.

Ein Ausführungsbeispiel einer erfindungsgemäßen Erntemaschine 1 zum Aufnehmen von landwirtschaftlichem Erntegut weist eine Ballenformeinrichtung 2 auf, die in einer Wickelkammer 3 befindlich ist. Die Wickelkammer 3 besitzt eine Einlassöffnung 4, durch die allgemein mit einer Aufnahmevorrichtung 6 aufgenommenes Erntegut wie beispielsweise Heu oder Stroh in die Wickelkammer 3 befördert werden kann. Eine Antriebsrolle 7 unterteilt die Ballenformeinrichtung 2 in einen dem Ballen zugewandtem Abschnitt 8 und einen dem Ballen abgewandten Abschnitt 9. Beiderseits der Einlassöffnung 4 angeordnete Walzen 11 begrenzen zusätzlich die Wickelkammer 3. Zu Beginn eines Ballenformvorgangs liegt der Abschnitt 8 der Ballenformeinrichtung 2 weiterhin an eine Startkammer ausbildenden Führungsvorrichtungen 12 an. Bei diesem Ausführungsbeispiel sind die Führungsvorrichtungen 12 als Umlenkrollen ausgebildet. Es kann sich hierbei jedoch auch um eine oder mehrere Führungsflächen handeln.

Die Ballenformeinrichtung 2 wird mit Hilfe eines Kraftspeichers 13 des Speichers 14 unter Spannung gehalten. Dadurch liegen die zwischen der Antriebsrolle 7 und einer Umlenkrolle 16 befindlichen Teile des Abschnitts 8 zu Beginn des Erntegutballenformvorgangs annähernd parallel zu den Seitenkanten 17 der die Wickelkammer 3 begrenzenden Führungsseitenwände. Der Speicher 14 umfasst im wesentlichen einen mit einer Umlenkrolle 18 versehenen Spannarm 19, an den der als Federelement ausgebildete Kraftspeicher 13 angreift. Füllt sich die Wickelkammer 3, so wird von dem Erntegut ein nach außen gerichteter Druck auf den Abschnitt 8 ausgeübt und das Federelement 13 wird gestaucht. Dabei ändert sich die zwischen den Umlenkrollen 21 befindliche Länge der Ballenformeinrichtung 2 und die Emtegutballenvergrößerung geht einher mit einer Vergrößerung der Wickelkammer 3.

Der Speicher 14 weist ein mit 22 bezeichnetes Stellmittel auf, welches ein Begrenzungselement 23 und ein Widerlager 24 als gehäusefeste Abstützung umfasst.

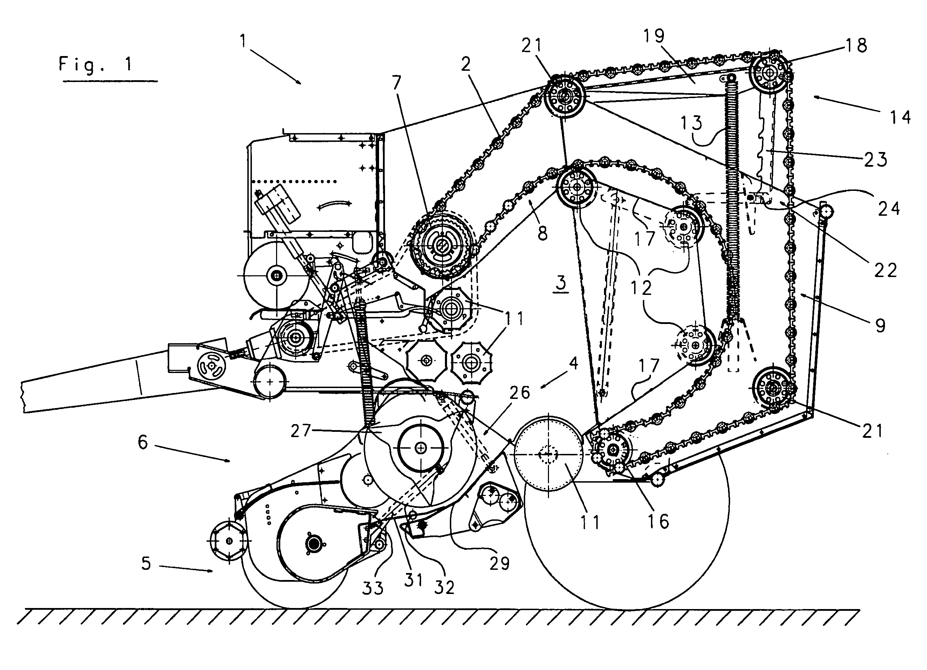

In der in Figur 1 dargestellten Wirkstellung des Stellmittels 22 greift eine Ausnehmung am unteren Ende des Begrenzungselements 23 in das Widerlager 24 ein. Hierdurch wird die weitere Freigabe von Länge der Ballenformeinrichtung 2 aus dem Speicher 14 verhindert, so daß es zur Ausbildung eines minimalen Erntegutballens kommt. Die vorher von dem Kraftspeicher 13, der hier ein Federelement ist, auf den Wickelboden 2 ausgeübte Spannung wirkt nun nur noch zusätzlich, da das Stellmittel die weitere Kontraktion des Kraftspeichers weitestgehend verhindert.

Bei einer geringfügig geänderten Position des Begrenzungselements 23, welches verschwenkbar bezüglich des Spannarms 19 ist, kann das Widerlager 24 in Eingriff mit einem weiter oben befindlichen Bereich des Begrenzungselements 23 gelangen. Entsprechend kann der Kraftspeicher 13 weiter kontraktieren und der Speicher 14 gibt mehr Wickelboden frei, so daß ein größerer Erntegutballen in der Wickelkammer 3 gebildet werden kann.

Nach der Aufnahme von Erntegut mittels eines nicht näher beschriebenen Erntegutaufnehmers 5 wird das aufgenommene Material durch den Förderkanal 26 in Richtung Einlassöffnung 4 transportiert. Dieser Weitertransport wird durch die Förderzinken 27 des Förderaggregates bewirkt.

Bei eventuell in den Förderkanal 26 eingeschwenkten Messern 28 einer Schneideinrichtung wird dabei das Erntegut gleichzeitig geschnitten.
Da es insbesondere bei Einsatz vieler Schneidmesser 28 zu Verstopfungen im Förderkanal kommen kann, weist die erfindungsgemäße Erntemaschine 1 einen Förderkanalboden auf, der aus zwei jeweils um eigene Achsen 32, 33 schwenkbaren Förderkanalbodenteilen 29 und 31 besteht. Der Förderkanalbodenteil 29 ist hierbei um eine Achse 32 verschwenkbar, während die Messer 28 um eine Achse 32.1 verschwenkbar sind. Der Förderkanalbodenteil 31 besitzt eine Schwenkachse 33.

Ersichtlich überlagern sich die einzelnen Teile 29 und 31 des Förderkanalbodens. Damit ist eine gute Weiterführung des angesammelten Ernteguts gewährleistet, da kein Erntegut in zwischen den Förderkanalbodenteilen vorhandene Öffnungen fallen kann. Hierbei ist es auch von Vorteil, daß das Ende des Förderkanalbodenteils 31, das am der Schwenkachse 33 entgegengesetzten Ende befindlich ist, parallel zu Bereichen des Förderkanalbodenteils 31 verläuft.

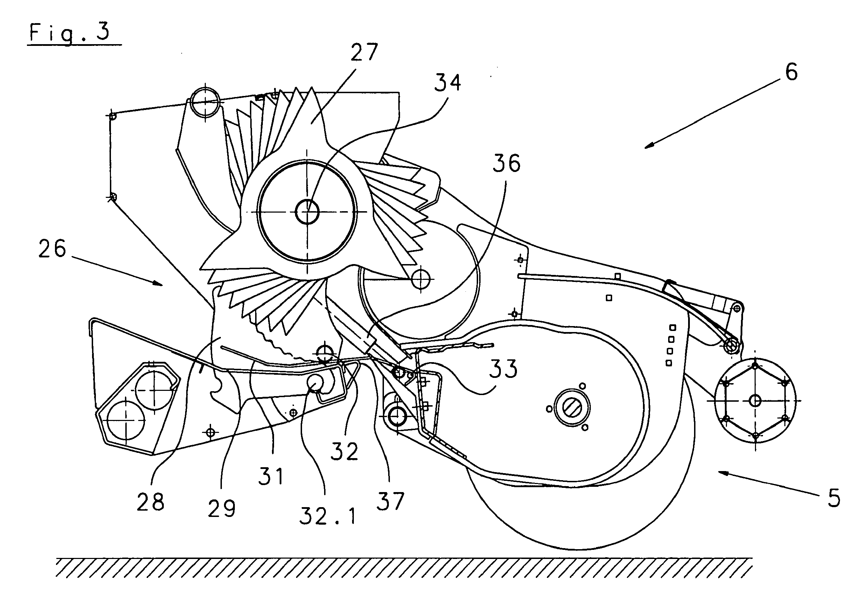

Die Anstellung des Förderkanalbodenteils 29 gegen den Förderkanalbodenteil 31 mit einem Winkel, der im Bereich der Schwenkachse 32 zu einer Beabstandung des Förderkanalbodenteils 31 von dem Förderkanalbodenteil 29 führt, hat besondere Vorteile. Bei der Überführung des hinteren Förderkanalbodenteils 29 in die in Fig. 3 gezeigte Position, vergrößert sich nicht nur der Bereich zwischen den Förderzinken 27 bzw. deren Achse 34 und dem Förderkanalbodenteil 29, sondern aufgrund der vorherigen Anstellung vergrößert sich der Förderkanal 26 ebenfalls in dem Bereich des Förderkanalbodenteils 31.

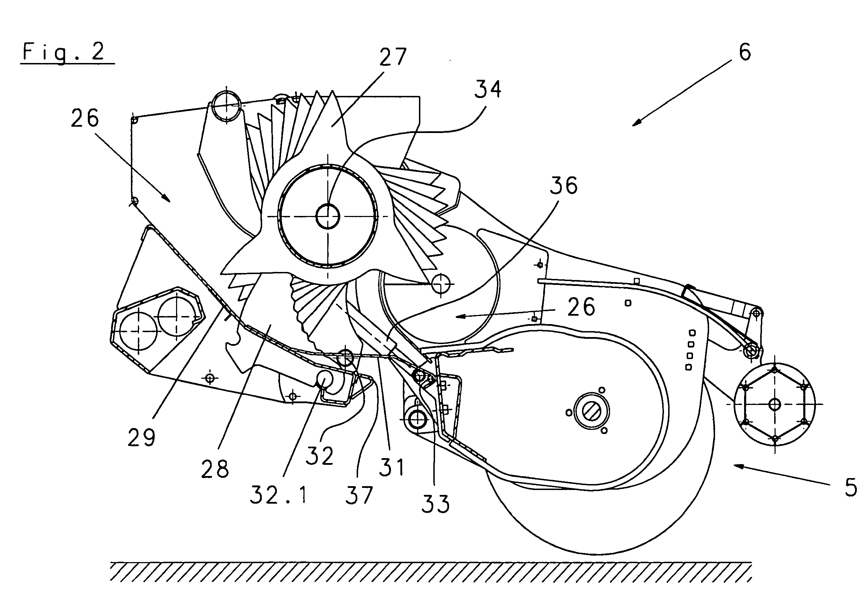

Die Formgebung des Förderkanalbodenteils 31 sorgt in der Betriebsstellung in Fig. 2 für eine gute Ergreifung des Ernteguts durch die Förderzinken 27, da der Förderkanal 26 entsprechend verengt ist. Bei Absenkung des in Gutflussrichtung hinteren Förderkanalbodenteils 29 senkt sich auch der vordere Teil 31 und insgesamt wird somit mehr Platz im Förderkanal 26 freigegeben als im Stand der Technik. Verstopfungen können entsprechend besser beseitigt werden, da bei der erfindungsgemäßen Erntemaschine 1 der Förderkanal 26 durch den zumindest zweigeteilten Förderkanalboden in Gutflussrichtung nicht nur nach hinten erweiterbar ist, sondern insgesamt und insbesondere auch im Bereich der Schwenkachse 32 des hinteren Förderkanalbodenteils 29 im Querschnitt vergrößert wird.

Vorteilhafterweise weisen beide Förderkanalbodenteile 29, 31 sich überdeckende Ausnehmungen auf, durch die beispielsweise die Messer 28 der Schneidvorrichtung geführt werden können.

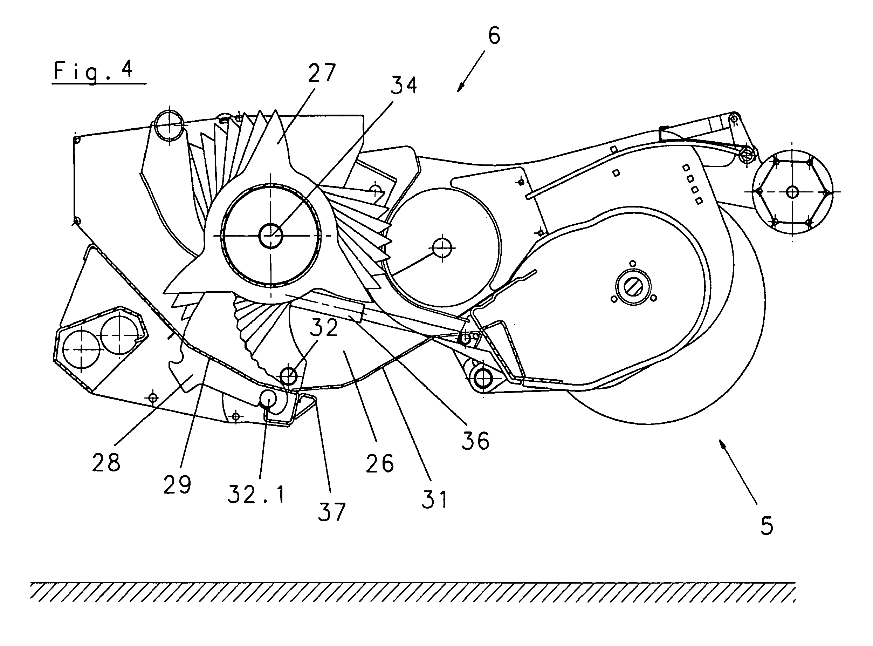

Die in Fig. 4 gezeigte Betriebsstellung ergibt sich aus der Verschwenkung des Erntegutaufnehmers 5 der Aufnahmevorrichtung 6 mit Hilfe eines Zylinders 36. Auch in diesem Fall wird der zwischen Förderkanalbodenteil 31 und der Rotorachse 34 befindliche Raum vergrößert, indem das der Schwenkachse 33 entgegengesetzte Ende des Förderkanalbodenteils 31 aus seiner in Fig. 2 gezeigten Position in Richtung der Schwenkachse 32 und über diese hinaus zum Ende 37 des Förderkanalbodenteil 29 verlagert wird. Da das Förderkanalbodenteil 29 im Bereich seiner Schwenkachse 32 nicht konzentrisch zur Achse 34 angeordnet ist, sondern sich in Richtung seines Endes 37 immer weiter von der Rotorachse 34 entfernt, entfernt sich somit auch das Förderkanalbodenteil 31 von der Rotorachse 34 und vergrößert den von Verstopfungen zu reinigenden Förderkanal 26.

Bei der in Fig. 4 gezeigten Betriebsstellung, die gleichzeitig der Transportstellung entspricht, ist es besonders vorteilhaft, daß durch das Anheben der Pick up bzw. des Erntegutaufnehmers 5, der Förderkanal 26 vergrößert wird, gleichzeitig aber kein Verlust von Erntegut auftritt, da der Förderkanal 26 insgesamt geschlossen bleibt. So können leichte Verstopfungen während des Betriebs durch ein kurzes Anheben der Pick up 5 möglicherweise bereits beseitigt werden, ohne daß dazu der Förderkanal mit seinen Bodenteilen die in Fig. 3 gezeigte Stellung gebracht werden muss, was auch mit Hilfe eines Stellmittels erfolgen kann, jedoch zu Verlust von Erntegut führt.

## Patentansprüche

1. Erntemaschine zum Aufnehmen von landwirtschaftlichem Erntegut mit einer Aufnahmevorrichtung (6), welche ein Förderaggregat mit einem Förderkanal (26) umfasst, durch den das Erntegut transportiert wird und dessen Querschnitt mittels eines absenkbaren Bodens in Förderrichtung erweiterbar ist, mit einem zumindest zweigeteilten Förderkanalboden, dessen einzelne Teile (29,31) um eigene Schwenkachsen (32,33) verschwenkbar sind und sich zumindest teilweise überlappen, **dadurch gekennzeichnet, dass** das in Gutflussrichtung vordere Förderkanalbodenteil (31) durch Verschwenkung des Erntegutaufnehmers (5) relativ zum in Gutflussrichtung hinteren Förderkanalbodenteil (29) verlagerbar ist.

2. Erntemaschine (1) nach Anspruch 1, **dadurch gekennzeichnet, dass** die quer zur Längsrichtung der Erntemaschine (1) angeordneten Förderkanalbodenteile (29,31) an zur Fahrtrichtung gesehen gleichen Längsseiten schwenkbeweglich gelagert sind.

3. Erntemaschine (1) nach Anspruch 1 oder 2, **dadurch gekennzeichnet, dass** die einzelnen Teile (29,31) des Förderkanalbodens zumindest teilweise in einem Winkel gegeneinander angestellt sind.

4. Erntemaschine (1) nach einem der Ansprüche 1 bis 3, **dadurch gekennzeichnet, dass** die einzelnen Teile (29, 31) des Förderkanalbodens in der Betriebsstellung sich zumindest teilweise deckende Ausnehmungen aufweisen.

5. Erntemaschine (1) nach einem der Ansprüche 1 bis 4, **dadurch gekennzeichnet, dass** der Querschnitt des Förderkanals (26) durch den zumindest zweigeteilten Förderkanalboden insgesamt erweiterbar ist.

6. Erntemaschine (1) nach einem der Ansprüche 1 bis 5, **dadurch gekennzeichnet, dass** der Förderkanal (26) bei Verschwenkung eines Teils (29,31) des Förderkanalbodens ebenfalls im Bereich eines anderen Teils (29,31) des Förderkanalbodens ebenfalls im Bereich eines anderen Teils (29, 31) des Förderkanalbodens erweiterbar ist.

7. Erntemaschine (1) nach einem der Ansprüche 1 bis 6, **dadurch gekennzeichnet, dass** ein Stellmittel zur Verschwenkung zumindest eines Teils (29;31) des Förderkanalbodens vorgesehen ist.

## Claims

1. A harvesting machine for picking up harvested agricultural crop with a receiving device (6) which comprises a conveying unit with a conveying duct (26) by means of which the harvested crop is conveyed and whose cross-section is extendible by means of a floor that can be lowered in the direction of conveying, with a conveying duct floor that can be divided into at least two, the component parts (29, 31) of which floor are pivotable about their own swivel axes (32, 33) and at least partially overlap one another, **characterised in that** the front conveying duct floor section (31), in the direction of crop flow, is displaceable by swivelling of the harvested crop receiver (5) relative to the rear conveying duct floor section (29) in the direction of crop flow.

2. The harvesting machine (1) according to claim 1, **characterised in that** the conveying duct floor sections (29, 31) arranged transversely to the longitudinal direction of the harvesting machine (1) are mounted so that they are pivotably movable on the same longitudinal sides viewed in the direction of travel.

3. The harvesting machine (1) according to claim 1 or 2, **characterised in that** the component parts (29, 31) of the conveying duct floor are at least partially arranged at an angle to one another.

4. The harvesting machine (1) according to any one of claims 1 to 3, **characterised in that** the individual component parts (29, 31) of the conveying duct floor exhibit at least partially overlapping recesses in the operating position.

5. The harvesting machine (1) according to any one of claims 1 to 4, **characterised in that** the cross-section of the conveying duct (26) is generally extendible by the conveying duct floor that can be divided into at least two.

6. The harvesting machine (1) according to any one of claims 1 to 5, **characterised in that** the conveying duct (26), by swivelling one part (29, 31) of the conveying duct floor, is also extendible in the region of another part (29, 31) of the conveying duct floor.

7. The harvesting machine (1) according to any one of claims 1 to 6, **characterised in that** an adjusting means is provided for swivelling at least one part (29; 31) of the conveying duct floor.

## Revendications

1. Machine de récolte (1) pour ramasser des produits agricoles de récolte comportant un dispositif de ramassage (6) ayant un équipement de transfert avec un canal de transfert (26) à travers lequel le produit est transporté et dont la section peut être agrandie à l'aide d'un fond susceptible d'être abaissé dans la direction de transfert, ainsi qu'un fond de canal de transfert au moins divisé en deux dont les différentes parties (29, 31) peuvent basculer autour de leur propre axe de basculement (32, 33) et se chevauchent au moins partiellement,
**caractérisée en ce que**
la pièce de fond de canal de transfert (31) en amont dans le sens de passage des produits peut être déplacée par rapport à la pièce de fond de canal de transfert (29), aval, dans le sens de passage des produits par basculement du ramasseur (5).

2. Machine de récolte (1) selon la revendication 1,
**caractérisée en ce que**
les pièces de fond de canal de transfert (29, 31) installées transversalement à la direction longitudinale de la machine de récolte (1), sont montées basculant sur les mêmes côtés longitudinaux, selon la direction de déplacement.

3. Machine de récolte (1) selon la revendication 1 ou 2,
**caractérisée en ce que**
les différentes pièces (29, 31) du fond de canal de transfert sont disposées au moins en partie suivant un angle, l'une par rapport à l'autre.

4. Machine de récolte (1) selon l'une des revendications 1 à 3,
**caractérisée en ce que**
les différentes pièces (29, 31) du fond de canal de transfert présentent des découpes qui se chevauchent au moins partiellement en position de fonctionnement.

5. Machine de récolte (1) selon l'une des revendications 1 à 4,
**caractérisée en ce que**
la section du canal de transfert (26) peut être globalement élargie par le fond de canal de transfert au moins divisé en deux parties.

6. Machine de récolte (1) selon l'une des revendications 1 à 5,
**caractérisée en ce que**
lors du basculement d'une pièce (29, 31) du fond du canal de transfert également le canal de transfert (26) peut être élargi dans la région d'une autre pièce (29, 31) du canal.

7. Machine de récolte (1) selon l'une des revendications 1 à 6,
**caractérisée par**
un moyen d'actionnement pour basculer au moins une pièce (29, 31) du fond de canal de transfert.
